# EUROPÄISCHE PATENTSCHRIFT

(11) **EP 2 706 014 B1**
(45) Veröffentlichungstag und Bekanntmachung des Hinweises auf die Patenterteilung: **15.07.2015**
(21) Anmeldenummer: 13179904.1
(22) Anmeldetag: 09.08.2013
(51) Int. Cl.: B65C 9/40, B67C 3/00

(54) **Rüstteil mit Identifikationselement**
Handling part with identification element
Pièce d'équipement avec élément d'identification

(30) Priorität: 06.09.2012 DE 102012215789
(43) Veröffentlichungstag der Anmeldung: 12.03.2014
(73) Patentinhaber: Krones AG, 93073 Neutraubling (DE)
(72) Erfinder: Zölfl, Markus, 93073 Neutraubling (DE); Pronold, Timo, 93073 Neutraubling (DE); Raith, Stefan, 93073 Neutraubling (DE)
(74) Vertreter: Grünecker Patent- und Rechtsanwälte PartG mbB

(56) Entgegenhaltungen:
- EP-A1- 2 332 846
- DE-A1-102005 059 312
- DE-A1-102010 053 772
- DE-A1-102011 116 192
- James Karki: "Signal Conditioning Piezoelectric Sensors", Texas Instruments , September 2000 (2000-09), XP002718412, Gefunden im Internet: URL:http://www.ti.com/lit/an/sloa033a/sloa 033a.pdf [gefunden am 2014-01-08]

## Beschreibung

Die Erfindung betrifft ein Rüstteil für eine in der Befüll- oder Flaschenherstellungsindustrie verwendete Maschine mit einem Identifikationselement und ein entsprechendes Verfahren.

### Stand der Technik

Aus dem Stand der Technik sind bereits unterschiedliche Rüstteile mit Identifikationselementen bekannt, die eine Identifikation des Rüstteils durch ein entsprechendes Lesegerät ermöglichen.

So zeigt beispielsweise die DE 10 060 581 A1 eine Förderanlage zum Transport von Gegenständen, wobei eine Sendereinrichtung vorgesehen ist, die einzeln Sende- und Empfangseinrichtungen ansteuern kann, wobei bei großem Stromverbrauch oder langen Standzeiten ein zusätzlicher Energiespeicher und ein Generator vorgesehen sein können, der aus der Umgebung Energie entnehmen kann. Diese Energieentnahme kann beispielsweise aus der umgebenden Wärme, Licht oder mechanischen Energie erfolgen.

Ferner zeigt die EP 13 84 123 B1 eine Transportanlage für Stückgut. Hier sind zur Ermittlung der Transporteurbelegung Sensoren vorgesehen, die eine Signal-Endeinheit aufweisen, die eine zusätzliche Verdrahtung mit dem Steuermodul überflüssig macht, das bedeutet also, die drahtlos Signale übermitteln kann. Die Sensoren werden mit Batterien oder Akkus versehen, wobei auch ein selbstgeneratorischer Betrieb durch beispielsweise einen Generator, der von den Förderbändern angetrieben wird, möglich ist. Ebenso können Solarzellen die notwendige Energie für die Sensoren bereitstellen.

Die DE 10 2007 025 521 A1 offenbart eine Behandlungsmaschine für Flaschen, Dosen oder dergleichen Behälter, wobei die Behandlungsmaschine mit wenigstens einem Identifikationselement ausgerüstet ist, das einem austauschbaren Maschinenteil zugeordnet ist. Dieses Identifikationselement ist dabei vorzugsweise als selbstklebendes Identifikationsetikett ausgeführt, das einem austauschbaren Maschinenteil zugeordnet ist. Mögliche Ausführungen hier sind beispielsweise Strichcodes oder Barcodes, die mit bekannten Scannervorrichtungen ausgelesen werden können. Besonders bevorzugt ist hier jedoch die Ausführung des Identifizierungselements mit Hilfe eine Transponders, der ein berührungsloses Auslesen der Identifizierung ermöglicht. Dieser Transponder verfügt in jedem Fall über einen Energiespeicher, beispielsweise eine integrierte Batterie und gegebenenfalls einen aufladbaren Kondensator, der beispielsweise beim Lesevorgang durch die Scannereinrichtung aufgeladen werden kann.

Die EP 2 332 846 A1 offenbart eine Behälterbehandlungsanlage mit einem Rüstteil gemäß dem Oberbegriff des Anspruchs 1.

### Aufgabe

Der Erfindung liegt die Aufgabe zugrunde, eine Identifikationsvorrichtung für ein austauschbares Rüstteil bereitzustellen, das möglichst zuverlässig und kompakt ist und gleichzeitig eine eindeutige Identifizierung des Rüstteils, insbesondere bei Ein- und Ausbau ermöglicht.

### Lösung

Dieses Problem wird erfindungsgemäß durch das Rüstteil nach Anspruch 1 und das Verfahren zum Identifizieren eines Rüstteils nach Anspruch 8 gelöst. Die Unteransprüche beinhalten zweckmäßige Ausgestaltungen der Erfindung.

Das erfindungsgemäße Rüstteil für eine in der Befüll- oder Flaschenherstellungsindustrie verwendete Maschine, das ein Identifikationselement umfasst, ist dadurch gekennzeichnet, dass das Identifikationselement einen piezoelektrischen Sender umfasst, der bei Einbau des Rüstteils und bei Ausbau des Rüstteils durch die wirkenden Kräfte aktiviert werden kann, und ein Identifikationssignal senden kann. Die Verwendung von piezoelektrischen Sendern gestattet zum Einen auf konstruktive kompakte Weise eine Identifikation eines austauschbaren Rüstteils, wobei durch die Wirkungsweise des piezoelektrischen Senders bei Einbau und/oder Ausbau gewährleistet werden kann, dass das Identifikationssignal gesendet wird.

In einer weiteren Ausführungsform ist das Rüstteil dadurch gekennzeichnet, dass der piezoelektrische Sender einen piezoelektrischen Kristall umfasst, der die für das Senden des Signals nötige Energie bereitstellen kann, wobei der piezoelektrische Kristall beispielsweise aus α-Quarz oder Galliumorthophosphat besteht. Diese Materialien weisen eine hohe Zuverlässigkeit auf und sind bis 573 °C stabil (bzw. 900 °C für Galliumorthophosphat), was eine vielfältige Einsetzbarkeit dieser Kristalle ermöglicht.

In einer weiteren Ausführungsform umfasst das Rüstteil einen Schutzmechanismus, der das Aktivieren des piezoelektrischen Senders, während das Rüstteil in der Maschine angebracht ist, verhindern kann. Dadurch wird gewährleistet, dass zusätzliche Beanspruchung des piezoelektrischen Senders vermieden wird und dieser nur bei Einbau und Ausbau aktiv wird. Das erhöht die Langlebigkeit des Senders.

In einer weiteren Ausführungsform ist das Rüstteil dadurch gekennzeichnet, dass der piezoelektrische Sender die für das Senden des Identifikationssignals benötigte Energie vollständig aus dem Einbau bzw. dem Ausbau des Rüstteils gewinnen kann. Dadurch werden zusätzliche Energieversorgungen, wie beispielsweise Batterien, überflüssig.

In einer weiteren Ausführungsform ist das Rüstteil dadurch gekennzeichnet, dass die Übertragung des Identifikationssignals drahtlos erfolgen kann. Das ist besonders von Vorteil, da so anfällige Verkabelungen überflüssig werden und ein für den Bediener komfortables Auslesen des Identifikationssignals möglich wird.

Weiterhin kann vorgesehen sein, dass das Identifikationselement des Rüstteils einen Energiespeicher umfasst, der einen Teil oder die gesamte der von dem piezoelektrischen Sender erzeugten Energie speichern kann. Im Fall des Speicherns der gesamten Energie kann das Aussenden des Signals verzögert werden. So kann das Identifikationssignal auch zu einem späteren Zeitpunkt gesendet werden. Wird nur ein Teil der von dem piezoelektrischen Sender erzeugten Energie gespeichert, kann beispielsweise zu einem späteren Zeitpunkt, insbesondere vor dem Ausbau durch ein erneutes Senden des Identifikationssignals geprüft werden, ob das korrekte Teil ausgebaut wird.

In einer weiteren Ausführungsform ist das Rüstteil dadurch gekennzeichnet, dass das Identifikationselement einen Verzögerungsmechanismus umfasst, der das Identifikationssignal zu einem beliebigen Zeitpunkt senden kann. Durch die in dem Energiespeicher gespeicherte Energie wird diese Verzögerung möglich. Der Verzögerungsmechanismus kann beispielsweise so eingestellt sein, dass er nicht direkt bei Einbau und damit Aktivierung des piezoelektrischen Senders das Signal aussendet, was erfordern würde, dass im selben Moment ein Bediener ein entsprechendes Lesegerät verwendet. Sondern es kann vorgesehen sein, dass der Verzögerungsmechanismus das Identifikationssignal zu einem späteren Zeitpunkt, wie beispielsweise wenige Minuten oder Stunden nach Einbau des Rüstteils, aussendet. Dadurch wird für den Bediener ein einfaches und komfortables Auslesen der Identifikationsinformation möglich.

Unter Verwendung dieses Rüstteils lässt sich ein Verfahren zum Identifizieren eines Rüstteils für eine in der Befüll- oder Flaschenherstellungsindustrie verwendete Maschine mittels eines Identifikationselements verwirklichen, wobei das Verfahren dadurch gekennzeichnet ist, dass ein piezoelektrischer Sender beim Einbau und/oder Ausbau des Rüstteils aus der Maschine durch die wirkenden Kräfte aktiviert wird und ein Identifikationssignal sendet. Dieses Verfahren ermöglicht eine für den Bediener sehr einfache und zuverlässige Identifikation von austauschbaren Rüstteilen an entsprechenden Maschinen.

In einer Ausführungsform ist das Verfahren dadurch gekennzeichnet, dass das Identifikationssignal ein rüstungsklassen-spezifisches Signal oder ein globally unique identifier ist. Ausgestaltungen des Identifikationssignals mit rüstungsklassen-spezifischen Signalen bzw. globally unique identifier gestatten nicht nur das Auslesen einer beliebigen Identifikationssignatur beim Einbau bzw. Ausbau eines Rüstteils, sondern ermöglicht gleichzeitig eine bauteil-spezifische Zuordnung des Signals und erleichtern somit die Identifikation der eingebauten bzw. ausgebauten Rüstteile.

In einer weiteren Ausführungsform ist das Verfahren dadurch gekennzeichnet, dass die für das Senden des Signals nötige Energie durch einen piezoelektrischen Kristall, beispielsweise α-Quarz oder Galliumorthophosphat, bereitgestellt wird, der die Energie beim Einbau bzw. beim Ausbau des Rüstteils umwandelt. Der Einsatz dieser gängigen Materialien in dem piezoelektrischen Sender gestattet eine flexible Einsetzbarkeit, da besonders diese Materialien eine hohe Temperaturfestigkeit bis zu 573 °C (für α-Quarz) bzw. 900 °C (für Galliumorthophosphat) aufweisen.

Darüber hinaus kann das Aktivieren des piezoelektrischen Kristalls, während das Rüstteil in der Maschine eingebaut ist, durch einen Schutzmechanismus verhindert werden. Damit wird das unbeabsichtigte Aussenden von Identifikationssignalen unterdrückt, und das Aussenden falscher Identifikationssignale (beispielsweise während ein anderes Rüstteil ausgebaut wird) kann verhindert werden.

In einer weiteren Ausführungsform ist das Verfahren dadurch gekennzeichnet, dass die Übertragung des Identifikationssignals drahtlos erfolgt. Dies erleichtert die Identifikation von Rüstteilen für den Bediener erheblich, da die Identifikation nicht mehr an einen bestimmten Ort gebunden ist, und keine direkte Verbindung mit dem Rüstteil bestehen muss.

In einer weiteren Ausführungsform ist das Verfahren dadurch gekennzeichnet, dass die durch den piezoelektrischen Sender gewonnene Energie in einem Energiespeicher ganz oder teilweise gespeichert wird. Damit kann Energie für das Senden des Identifikationssignals zu einem späteren Zeitpunkt vorgehalten werden, oder bei nur teilweiser Speicherung der Energie kann Energie gespeichert werden, die für die Aussendung eines weiteren Identifikationssignals, beispielsweise unmittelbar vor Ausbau des Rüstteils benötigt wird.

In einer entsprechenden Ausführungsform ist das Verfahren dadurch gekennzeichnet, dass das Identifikationssignal mittels eines Verzögerungsmechanismus unter Nutzung der im Energiespeicher gespeicherten Energie zu einem Zeitpunkt, der von Einbau bzw. Ausbau des Rüstteils verschieden ist, gesendet wird. Damit wird dem Bediener ermöglicht, das Auslesen des Identifikationssignals nicht zum selben Zeitpunkt des Ausbaus bzw. Einbaus durchführen zu müssen, sondern erlaubt ein späteres Auslesen des Identifikationssignals, was den Umbau des Rüstteils erleichtert.

In einer weiteren Ausführungsform ist das Verfahren dadurch gekennzeichnet, dass das Identifikationssignal omnidirektional ausgesendet wird. Das gestattet bei hinreichender großer Signalstärke, dass es einem Bediener an praktisch jedem Ort in der unmittelbaren Umgebung der Maschine, in die das Rüstteil eingebaut bzw. aus der das Rüstteil ausgebaut wird, das Identifikationssignal auszulesen.

### Kurze Beschreibung der Figuren

- Fig. 1: Schematische Darstellung eines erfindungsgemäßen Rüstteils zum Einbau in eine Maschine;
- Fig. 2a bis 2c: Schematische Darstellungen der Wirkungsweise des piezoelektrischen Senders;
- Fig. 3: Schematische Darstellung der Schutzvorrichtung;
- Fig. 4: Schematischer Aufbau des Rüstteils mit zusätzlichem Energiespeicher.

### Ausführliche Figurenbeschreibung

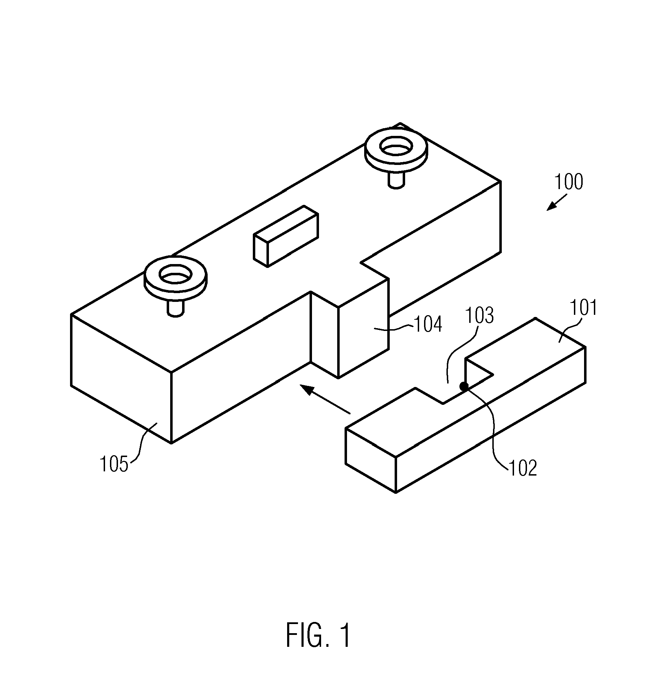

Fig. 1 zeigt eine Vorrichtung 100, die ein erfindungsgemäßes Rüstteil 101 umfasst, das in einer entsprechend vorgesehenen Maschine 105 eingebaut werden kann. Das Rüstteil 101 umfasst wenigstens eine Einkerbung 103, in der der piezoelektrische Sender 102 verbaut ist. Das gesamte Identifikationselement umfasst dabei nicht nur den piezoelektrischen Sender 102, sondern kann weitere Bauteile umfassen, die hier nicht gezeigt sind. Die Einkerbung 103 ist dergestalt ausgeprägt, dass sie in eine entsprechende Auskerbung 104 der Vorrichtung 105 gemäß eines Schlüssel-Schloss-Prinzips passt. Bei der Maschine 105 kann es sich um beliebige, beispielsweise üblicherweise in der Flaschenherstellungsindustrie verwendete Maschinen, wie Blasform-Maschinen, Etikettier-Maschinen oder dergleichen handeln. Ebenso kann es sich um eine Transportvorrichtung, wie beispielsweise einen Umlenkstern handeln. Das Rüstteil 101 kann dann beispielsweise ein Bestandteil der Übergabevorrichtung des Umlenksterns oder eine Blasform sein. In jedem Fall ist der piezoelektrische Sender 102 in einer Einkerbung 103 vorgesehen, die vorzugsweise genormt ist. Das hat den Vorteil, dass der piezoelektrische Sender in bereits bekannte Vorrichtungen eingebaut werden kann bzw. diese in Bezug auf Auskerbungen 104 bzw. Einkerbungen 103 geringfügig modifiziert werden müssen. Da in der Industrie üblicherweise genormte Rüstteile verwendet werden, stellt dies jedoch kein prinzipielles Problem dar.

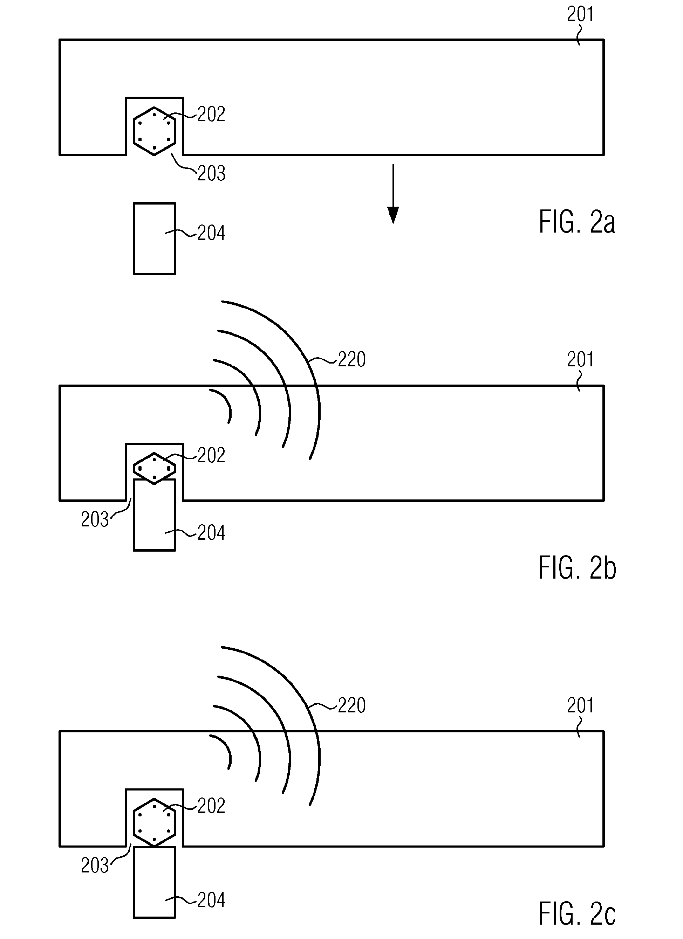

Fig. 2 ist eine schematische Darstellung des Einbaus bzw. Ausbaus eines Rüstteils 201 in eine entsprechende Maschine. Dabei ist stellvertretend für die Maschine, in die das Rüstteil 201 eingebaut wird, hier die Auskerbung 204 dargestellt, mit der die Befestigung des Rüstteils 201 an der Maschine erfolgt. In den Fig. 2a bis 2c ist der piezoelektrische Sender 202, der in dem Rüstteil 201 vorgesehen ist, nur schematisch dargestellt bzw. durch das im Sender enthaltene piezoelektrische Element (spezieller Kristall oder auch spezielle piezoelektrische Keramiken) symbolisiert und insbesondere in Relation zur Dimensionierung des Rüstteils 201 zur Verbesserung der Übersichtlichkeit sehr groß dargestellt. Für alle Anwendungen ist es bevorzugt, dass der piezoelektrische Sender 202 oder zumindest der piezoelektrische Kristall an der der Öffnung der Einkerbung 203 gegenüberliegenden Seite angebracht ist. Diese Positionierung gestattet zunächst ein ungehindertes Einführen der Ausbuchtung 204 der entsprechenden Maschine in die Einkerbung 203 des Rüstteils 201, um die Verbindung herzustellen, und gewährleistet andererseits, dass der piezoelektrische Sender 202 nur dann aktiviert wird, wenn das Rüstteil ein- bzw. ausgebaut wird, um zufällige Aktivierungen zu verhindern. Es versteht sich, dass auch das Versehen des Rüstteils 201 mit einer Auskerbung und der Maschine mit einer entsprechenden Einkerbung möglich ist. Jedoch kann der der piezoelektrische Sender, bzw. der piezoelektrische Kristall, der dann an der Auskerbung des Rüstteils angebracht wäre, versehentlich aktiviert werden. Wird der piezoelektrische Sender allerdings nur als Signalgeber für den korrekten Ein- bzw. Ausbau des Rüstteils verwendet, kann er auch in der Einkerbung der Maschine vorgesehen sein.

Fig. 2a zeigt die Situation während des Einbaus des Rüstteils 201. Dieses wird in der dargestellten Pfeilrichtung auf die Maschine bzw. die repräsentative Auskerbung 204 zu bewegt. Bevorzugt sind die Einkerbung 203 des Rüstteils 201 und die Auskerbung 204 der hier nicht dargestellten Maschine so konstruiert, dass sie im Sinne eines Schlüssel-Schloss-Prinzips nur in einer vorgesehenen Stellung ineinander passen, um Fehlkonstruktionen zu vermeiden. Durch das Anbringen des Rüstteils 201 an der Maschine wird der Piezokristall im piezoelektrische Sender 202, wie in Fig. 2b dargestellt, deformiert. Die Form des Piezokristalls 202 ändert sich so lang, wie die Bewegung des Rüstteils 201 relativ zur Auskerbung 204, beginnend mit dem ersten Kontakt der Auskerbung 204 mit dem Piezokristall 202 bis zur endgültigen Positionierung bzw. Fixierung des Rüstteils, andauert.

Ist das Rüstteil eingebaut, weist der Piezokristall eine von der in Fig. 2a dargestellten Form verschiedene Form auf, wie sie beispielsweise in Fig. 2b dargestellt ist. Die Deformation des piezoelektrischen Kristalls 202 sorgt für eine entstehende Spannung und bewirkt im Sender das Aussenden eines elektrischen Signals 220. Bei geeigneter Wahl des piezoelektrischen Senders bzw. des verwendeten piezoelektrischen Kristalls lässt sich ein spezielles Signal bzw. ein spezieller Signalverlauf erzeugen. Diese Tatsache kann ausgenutzt werden, um spezielle Rüstteile 201 mit speziellen piezoelektrischen Sendern 202 bzw. piezoelektrischen Kristallen zu versehen, die beispielsweise für jede Rüstteilklasse oder sogar für jedes Rüstteil (globally unique identifier) einzigartig sind.

Fig. 2c deutet den Ausbau des Rüstteils aus der Maschine repräsentative der Auskerbung 204 an. Aus der in Fig. 2b dargestellten fixierten Stellung des Rüstteils 201 wird das Rüstteil 201 nun in der angegeben Pfeilrichtung bewegt, wodurch der piezoelektrische Kristall im piezoelektrischen Sender 202, abermals verformt wird. Da der piezoelektrische Effekt zeitlich reversibel ist, wird während dieser Deformation des piezoelektrischen Kristalls erneut ein entsprechendes Signal 220 ausgesandt.

Zusammenfassend ermöglicht die Ausnutzung des piezoelektrischen Effekts mit Hilfe eines piezoelektrischen Senders bzw. piezoelektrischen Kristalls die Umwandlung der Energie, die beim Einbau bzw. Ausbau des Rüstteils 201 in die Maschine genutzt wird, teilweise in elektrische Spannung, die wiederum genutzt werden kann, um mit Hilfe eines entsprechenden Senders ein Signal, insbesondere ein Identifikationssignal, zu senden. Durch die zeitliche Reversibilität des piezoelektrischen Effekts, das heißt, dass in beide Deformationsrichtungen (Ein- und Ausbau des Kristalls) die gleiche Spannungsdifferenz erzeugt wird, ist sowohl beim Einbau als auch beim Ausbau das Aussenden eines entsprechenden Identifikationssignals möglich.

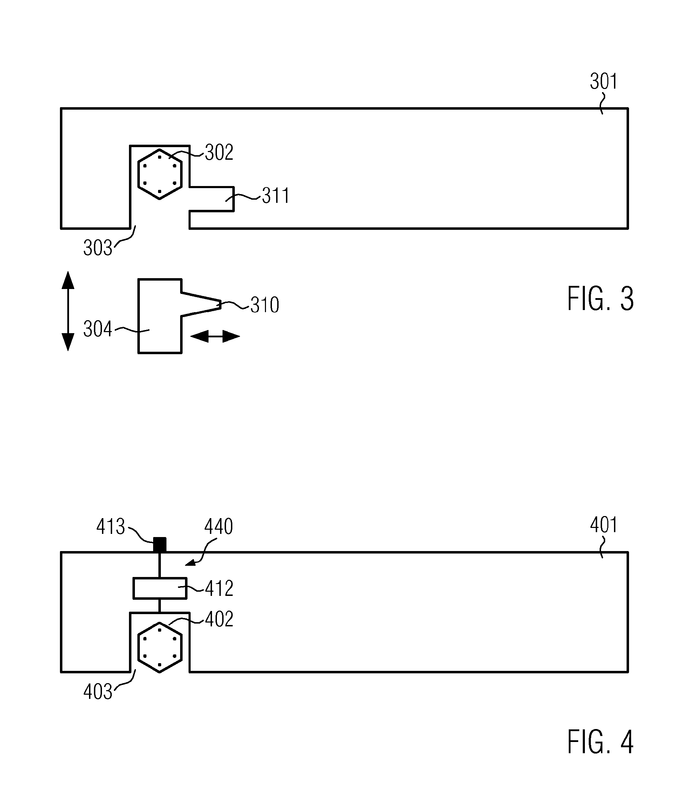

Fig. 3 zeigt eine über die bereits beschriebene Verwirklichung der Ausbuchtung 304 und Einbuchtung 303 hinausgehende Schutzvorrichtung 310, die eine möglichst sichere Arretierung des Rüstteils 301 ermöglicht. Dazu kann beispielsweise vorgesehen sein, dass die Einkerbung 303 des Rüstteils 301 eine Einbuchtung 311 umfasst. Demgegenüber steht an der Auskerbung 304 der Maschine, an der das Rüstteil 301 befestigt werden soll, ein vorzugsweise beweglicher Einraster 310. Dieser kann abgeschrägt sein, um ein Einführen der Auskerbung 304 zu erleichtern. Nur, wenn sich das Rüstteil 301 in der korrekten endgültigen Position befindet, rastet der Einraster 310 in der Einbuchtung 311 ein. Hier ist bevorzugt, dass das Rüstteil 301 so fixiert ist, dass keine Deformation des piezoelektrischen Kristalls im piezoelektrischen Senders 302 mehr auftreten kann. Alternativ zur Einbuchtung 311 und dem Einraster 310 können auch Verschraubungen oder andere, lösbare Verbindungen vorgesehen sein, beispielsweise Klickverbindungen.

Fig. 4 zeigt eine detailliertere Ansicht des Rüstteils 401 und insbesondere eine Gesamtansicht des piezoelektrischen Senders 440. Der piezoelektrische Sender 440 umfasst den bereits in den vorherigen Abbildungen beschriebenen piezoelektrischen Kristall 402 und weiterhin eine Steuereinheit 412 und eine eventuell von dieser räumlich getrennt angebrachte Sendeeinheit 413. Hier sei angemerkt, dass die Steuereinheit 412 beispielsweise einen Mikroprozessor umfassen kann, der die für das Senden des Signals nötigen Informationen und entsprechende Befehle an die Sendeeinheit 413 überträgt. Es kann vorgesehen sein, dass das Identifikationssignal durch die Sendeeinheit 413 nicht zeitgleich mit dem Einbau des Rüstteils 401 erfolgt. In diesem Fall umfasst die Steuereinheit 412 weiterhin einen nicht gezeigten Energiespeicher, der die durch den piezoelektrischen Kristall 402 gewonnene Energie speichern kann. Dieser Speicher kann beispielsweise in Form von wieder aufladbaren Akkumulatoren oder als Kondensator ausgebildet sein. Abhängig davon, wie viel Energie durch den Einbau des Rüstteils 401 bzw. dessen Ausbau vom piezoelektrischen Kristall 402 an die Steuereinheit 412 übertragen werden kann, kann bei Vorsehen eines Speichers auch ein Schlafmodus der Steuereinheit 412 vorgesehen sein, der beispielsweise einen weiterhin vorgesehenen passiven Empfänger mit Energie versorgt. Das ermöglicht die Aktivierung der Steuereinheit 412 und damit verbunden das Senden des Identifikationssignals durch eine entsprechende Aufforderung eines Lesegeräts für das Identifikationssignal zu einem beliebigen Zeitpunkt nach dem Ein- bzw. Ausbau des Rüstteils 401.

In diesem Zusammenhang sei erwähnt, dass die Sendeeinheit 413 sowohl als drahtlose Sendeeinheit als auch als Kontaktsender ausgebildet sein kann. Im ersten Fall sendet die Sendeeinheit 413 bevorzugt ein omnidirektionales Signal in Form einer elektromagnetischen Welle, um das Identifikationssignal zu übermitteln. Damit wird die Auswertung des Identifikationssignals durch einen Bediener im Wesentlichen ortsunabhängig, was gerade bei schwer zugänglichen Rüstteilen von Vorteil ist. Diese Form der Übertragung des Identifikationssignals ist jedoch sehr energieaufwändig, da ein omnidirektional abgestrahltes elektromagnetisches Signal in jedem Raumpunkt hinreichend stark sein muss. Dafür ist ein Anbringen der Sendeeinheit 413 an der Oberfläche des Rüstteils 401 bevorzugt, da so das Abstrahlen des Identifikationssignals zumindest in einem Halbraum oberhalb der Oberfläche des Rüstteils ohne Materialdurchtritt möglich ist, wodurch eine Absorption und damit Verminderung der Signalstärke verhindert wird. Hierbei ist es von Vorteil, wenn ein Lesegerät verwendet wird, das jederzeit in der Lage ist, ein drahtlos gesendetes Identifikationssignal zu empfangen, was bedeutet, dass das Lesegerät in jedem Fall permanent mit Energie versorgt sein sollte, um auszuschließen, dass das Identifikationssignal zwar gesendet, aber nicht empfangen wird.

Im Fall der Ausbildung der Sendeeinheit 413 als Kontaktsender umfasst die Sendeeinheit im Wesentlichen einen Anschluss, an den ein entsprechendes Lesegerät angeschlossen werden kann, womit die Übertragung des Identifikationssignals initiiert wird. Obwohl somit die Flexibilität der beschriebenen Identifikationsmethode verringert oder ein direktes Ablesen am Rüstteil nötig ist, kann so ein sicheres Auslesen des Identifikationssignals realisiert werden, was insbesondere bei großen Anlagen, die einen erheblichen Teil eines drahtlos übertragenen Signals absorbieren könnten, eine eindeutige Identifikation gewährleistet.

Unabhängig von der Ausgestaltung des Senders als Kontaktsender oder als drahtlose Sendeeinheit ist es insbesondere bei Verwendung mehrerer Rüstteile in einem Rüstvorgang mit Hilfe der Identifikationssignale möglich, auch die Reihenfolge des Ein- bzw. Ausbaus verschiedener Teile zu überwachen, da die ausgesendeten Identifikationssignale, die wenigstens rüstteilklassenspezifisch, oder sogar als globally unique identifier ausgestaltet sind, einem genauen Zeitpunkt zugeordnet werden können. Ebenfalls kann so der Rüstvorgang überwacht werden und es können entsprechende Informationen, beispielsweise mit Hilfe eines mobilen Endgeräts an den Bediener der Maschine übermittelt werden. Basierend darauf können auch weitere Informationen, beispielsweise Warnhinweise oder bestimmte Vorgehensweisen beim Ein- bzw. Ausbau bestimmter Rüstteile, an den Bediener weitergegeben werden. So kann beispielsweise, wenn zwei oder mehr Rüstteile A, B, .....X eingebaut oder ausgebaut werden müssen, nach Einbau von Teil A durch Aussenden des Identifikationssignals das mobile Endgerät veranlasst werden, für den Einbau von Teil B spezifische Informationen anzuzeigen. Ferner besteht die Möglichkeit, einen ausgeführten Rüstvorgang bzw. die Reihenfolge der Rüstvorgänge zu dokumentieren und zu speichern.

## Patentansprüche

1. Rüstteil (101) für eine in der Befüll- oder Flaschenherstellungsindustrie verwendete Maschine (105), das ein Identifikationselement umfasst, **dadurch gekennzeichnet, dass** das Identifikationselement einen piezoelektrischen Sender (102) mit einem piezoelektrischen Element umfasst, der bei Einbau des Rüstteils (101) und/oder bei Ausbau des Rüstteils (101) durch die wirkenden Kräfte aktiviert werden und ein Identifikationssignal (220) senden kann.

2. Rüstteil (101) nach Anspruch 1, **dadurch gekennzeichnet, dass** das piezoelektrische Element ein piezoelektrischer Kristall oder eine piezoelektrische Keramik ist, der die für das Senden des Identifikationssignals (220) nötige Energie bereitstellen kann, wobei der piezoelektrische Kristall beispielsweise aus α -Quarz oder Galliumorthophosphat besteht.

3. Rüstteil (101) nach Anspruch 1 oder 2, **dadurch gekennzeichnet, dass** ein Schutzmechanismus vorgesehen ist, der das Aktivieren des piezoelektrischen Senders (102), während das Rüstteil (101) in der Maschine (105) angebracht ist, verhindern kann.

4. Rüstteil (101) nach einem der Ansprüche 1 bis 3, **dadurch gekennzeichnet, dass** das piezoelektrische Element die für das Senden des Identifikationssignals (220) benötigte Energie vollständig aus dem Einbau bzw. dem Ausbau des Rüstteils (101) gewinnen kann.

5. Rüstteil (101) nach einem der Ansprüche 1 bis 4, **dadurch gekennzeichnet, dass** der piezoelektrische Sender (102) eine drahtlose Übertragung des Identifikationssignals (220) ermöglichen kann.

6. Rüstteil (101) nach einem der Ansprüche 1 bis 5, **dadurch gekennzeichnet, dass** das Identifikationselement einen Energiespeicher umfasst, der einen Teil der vom piezoelektrischen Element erzeugten Energie oder die gesamte vom piezoelektrischen Element erzeugte Energie speichern kann.

7. Rüstteil (101) nach Anspruch 6, **dadurch gekennzeichnet, dass** das das Identifikationselement einen Verzögerungsmechanismus umfasst, der das Identifikationssignal (220) zu einem beliebigen Zeitpunkt senden kann.

8. Verfahren zum Identifizieren von einem Rüstteil für (101) eine in der Befüll- oder Flaschenherstellungsindustrie verwendete Maschine (105) mittels eines Identifikationselements, **dadurch gekennzeichnet, dass** ein piezoelektrischer Sender (102), der ein piezoelektrisches Element umfasst, beim Einbau und Ausbau des Rüstteils (101) aus der Maschine (105) durch die wirkenden Kräfte aktiviert wird und ein Identifikationssignal (220) sendet.

9. Verfahren nach Anspruch 8, **dadurch gekennzeichnet, dass** das Identifikationssignal (220) ein rüstteilklassenspezifisches Signal und/oder ein globally unique identifier ist.

10. Verfahren nach Anspruch 8 oder 9, **dadurch gekennzeichnet, dass** die für das Senden des Identifikationssignals (220) nötige Energie durch einen piezoelektrischen Kristall, beispielsweise α -Quarz oder Galliumorthophosphat, bereitgestellt wird, der die Energie beim Einbau bzw. beim Ausbau des Rüstteils umwandelt.

11. Verfahren nach einem der Ansprüche 8 bis 10, **dadurch gekennzeichnet, dass** das Aktivieren des piezoelektrischen Senders (102), während das Rüstteil (101) in der Maschine (105) eingebaut ist, durch einen Schutzmechanismus verhindert wird.

12. Verfahren nach einem der Ansprüche 8 bis 11, **dadurch gekennzeichnet, dass** die Übertragung des Identifikationssignals (220) drahtlos erfolgt.

13. Verfahren nach einem der Ansprüche 8 bis 12, **dadurch gekennzeichnet, dass** die durch das piezoelektrische Element gewonnene Energie in einem Energiespeicher ganz oder teilweise gespeichert wird.

14. Verfahren nach Anspruch 13, **dadurch gekennzeichnet, dass** das Identifikationssignal (220) mittels eines Verzögerungsmechanismus unter Nutzung der im Energiespeicher gespeicherten Energie zu einem Zeitpunkt, der von Einbau bzw. Ausbau des Rüstteils (101) verschieden ist, gesendet wird.

15. Verfahren nach einem der Ansprüche 8 bis 14, **dadurch gekennzeichnet, dass** das Identifikationssignal (220) omnidirektional ausgesendet wird.

## Claims

1. A change part (101), which is used for a machine (105) employed in the filling or bottle manufacturing industry and which includes an identification element, **characterized in that** the identification element comprises a piezoelectric transmitter (102) with a piezoelectric element, which, when the change part (101) is mounted and/or demounted, is able to be activated by the forces acting thereon and to transmit an identification signal (220).

2. The change part (101) according to claim 1, **characterized in that** the piezoelectric element is a piezoelectric crystal or a piezoelectric ceramic capable of providing the energy required for transmitting the identification signal (220), the piezoelectric crystal consisting e.g. of α-quartz or gallium orthophosphate.

3. The change part (101) according to claim 1 or 2, **characterized in that** a protection mechanism is provided, which is capable of preventing activation of the piezoelectric transmitter (102) as long as the change part (101) is attached to the machine (105).

4. The change part (101) according to one of the claims 1 to 3, **characterized in that** the piezoelectric element is able to obtain the full amount of energy required for transmitting the identification signal (220) from the mounting and/or demounting of the change part (101).

5. The change part (101) according to one of the claims 1 to 4, **characterized in that** the piezoelectric transmitter (102) is able to allow wireless transmission of the identification signal (220).

6. The change part (101) according to one of the claims 1 to 5, **characterized in that** the identification element includes an energy storage unit which is able to store part of the energy generated by the piezoelectric element or the total amount of the energy generated by the piezoelectric element.

7. The change part (101) according to claim 6, **characterized in that** the identification element includes a delay mechanism which is able to transmit the identification signal (220) at an arbitrary moment in time.

8. A method of identifying, by means of an identification element, a change part (101) for a machine (105) employed in the filling or bottle manufacturing industry, **characterized in that** a piezoelectric transmitter (102) comprising a piezoelectric element is activated, when the change part (101) is mounted to and demounted from the machine (105), by the forces acting thereon and transmits an identification signal (220).

9. The method according to claim 8, **characterized in that** the identification signal (220) is a change part class-specific signal and/or a globally unique identifier.

10. The method according to claim 8 or 9, **characterized in that** the energy required for transmitting the identification signal (220) is provided by a piezoelectric crystal, e.g. α-quartz or gallium orthophosphate, which converts the energy generated during mounting and/or demounting of the change part.

11. The method according to one of the claims 8 to 10, **characterized in that** activation of the piezoelectric transmitter (102) is prevented by a protection mechanism as long as the change part (101) is mounted in the machine (105).

12. The method according to one of the claims 8 to 11, **characterized in that** the identification signal (220) is transmitted by wireless transmission.

13. The method according to one of the claims 8 to 12, **characterized in that** the energy obtained through the piezoelectric element is stored fully or partly in an energy storage unit.

14. The method according to claim 13, **characterized in that** the identification signal (220) is transmitted by means of a delay mechanism, utilizing the energy stored in the energy storage unit, at a moment in time different from the mounting and/or demounting of the change part (101).

15. The method according to one of the claims 8 to 14, **characterized in that** the identification signal (220) is transmitted omnidirectionally.

## Revendications

1. Pièce d'équipement (101) destinée à une machine (105) utilisée dans l'industrie de la fabrication ou du remplissage de bouteilles, qui comprend un élément d'identification, **caractérisée en ce que** l'élément d'identification comprend un émetteur piézoélectrique (102) avec un élément piézoélectrique, qui, lors du montage d'implantation de la pièce d'équipement (101) et/ou du démontage de la pièce d'équipement (101), peut être activé par les forces agissant à cette occasion, et peut émettre un signal d'identification (220).

2. Pièce d'équipement (101) selon la revendication 1, **caractérisée en ce que** l'élément piézoélectrique est un cristal piézoélectrique ou une céramique piézoélectrique, qui est en mesure de fournir l'énergie nécessaire pour émettre le signal d'identification (220), le cristal piézoélectrique étant par exemple constitué de quartz α ou d'orthophosphate de gallium.

3. Pièce d'équipement (101) selon la revendication 1 ou la revendication 2, **caractérisée en ce qu'**il est prévu un mécanisme de protection, qui est en mesure d'empêcher l'activation de l'émetteur piézoélectrique (102) pendant que la pièce d'équipement (101) est placée dans la machine (105).

4. Pièce d'équipement (101) selon l'une des revendications 1 à 3, **caractérisée en ce que** l'élément piézoélectrique est en mesure de récupérer en totalité l'énergie nécessaire pour émettre le signal d'identification (220), à partir du montage d'implantation et respectivement du démontage de la pièce d'équipement (101).

5. Pièce d'équipement (101) selon l'une des revendications 1 à 4, **caractérisée en ce que** l'émetteur piézoélectrique (102) peut permettre une transmission sans fil du signal d'identification (220).

6. Pièce d'équipement (101) selon l'une des revendications 1 à 5, **caractérisée en ce que** l'élément d'identification comprend un accumulateur d'énergie, qui est en mesure de stocker une partie de l'énergie produite par l'élément piézoélectrique ou la totalité de l'énergie produite par l'élément piézoélectrique.

7. Pièce d'équipement (101) selon la revendication 6, **caractérisée en ce que** l'élément d'identification comprend un mécanisme de temporisation, qui est en mesure d'émettre le signal d'identification (220) à un instant quelconque.

8. Procédé pour identifier une pièce d'équipement (101) destinée à une machine (105) utilisée dans l'industrie de la fabrication ou du remplissage de bouteilles, au moyen d'un élément d'identification, **caractérisé en ce qu'**un émetteur piézoélectrique (102), qui comprend un élément piézoélectrique, est activé lors du montage d'implantation et du démontage de la pièce d'équipement (101) de la machine (105), par les forces agissant à cette occasion, et émet un signal d'identification (220).

9. Procédé selon la revendication 8, **caractérisé en ce que** le signal d'identification (220) est un signal spécifique à une classe d'identification de pièce d'équipement et/ou un GUID (globally unique identifier).

10. Procédé selon la revendication 8 ou la revendication 9, **caractérisé en ce que** l'énergie nécessaire pour émettre le signal d'identification (220) est fourni par un cristal piézoélectrique, par exemple constitué de quartz α ou d'orthophosphate de gallium, qui convertit l'énergie lors du montage d'implantation et respectivement du démontage de la pièce d'équipement.

11. Procédé selon l'une des revendications 8 à 10, **caractérisé en ce que** l'activation de l'émetteur piézoélectrique (102) pendant que la pièce d'équipement (101) est monté dans la machine (105), est empêchée par un mécanisme de protection.

12. Procédé selon l'une des revendications 8 à 11, **caractérisé en ce que** la transmission du signal d'identification (220) s'effectue sans fil.

13. Procédé selon l'une des revendications 8 à 12, **caractérisé en ce que** l'énergie produite par l'élément piézoélectrique est stockée en totalité ou en partie dans un accumulateur d'énergie.

14. Procédé selon la revendication 13, **caractérisé en ce que** le signal d'identification (220) est émis au moyen d'un mécanisme de temporisation, en utilisant l'énergie stockée dans l'accumulateur d'énergie, à un instant différent du montage d'implantation ou respectivement du démontage de la pièce d'équipement (101).

15. Procédé selon l'une des revendications 8 à 14, **caractérisé en ce que** le signal d'identification (220) est émis de manière omnidirectionnelle.
